# EUROPEAN PATENT APPLICATION

(11) **EP 4 321 433 A2**
(43) Date of publication of application: **14.02.2024**
(21) Application number: 23190339.4
(22) Date of filing: 08.08.2023
(51) Int. Cl.: B64D 11/00, B62B 5/04

(54) **AIRCRAFT CATERING SYSTEMS, METHODS, AND DEVICES**

(30) Priority: 11.08.2022 IN 202241045882; 11.10.2022 US 202217963467
(71) Applicant: B/E Aerospace, Inc., Winston-Salem, NC 27105 (US)
(72) Inventor: MANJUNATH, Naveen, Bangalore (IN)
(74) Representative: Dehns

(57) **Abstract**

A trolley (400, 500) is disclosed herein. In various embodiments, the trolley comprises: a housing (610) defining a cavity (612); a handle (614) coupled to the housing; a sensor (404) coupled to the handle; a plurality of wheels (620) coupled to the housing; and a brake system (604) configured to lock a wheel in the plurality of wheels in response to a hand being released from the handle based on sensor data from the sensor. The trolley can comprise a control system and/or a sanitization system.

## Description

### CROSS-REFERENCE TO RELATED APPLICATIONS

This application claims priority to, and the benefit of, India Patent Application No. 202241045882 (DAS CODE: A71E), filed August 11, 2022, and titled "AIRCRAFT CATERING SYSTEMS, METHODS, AND DEVICES," and US application 17/963,467.

### FIELD

The present disclosure relates to aircraft catering systems, methods, and devices, and more particularly towards safety systems for trolleys for use in aircrafts.

### BACKGROUND

Airline catering trolleys are used by the flight attendants to serve food and water to the passengers. When answering the queries of the passengers the flight attendants may forget to push the brakes on the trolley wheels and may result in a passenger or flight attendant being injured. Cabin lights are often turned on when the catering trolleys are being utilized. In this regard, sleeping passengers may be disrupted during catering service aboard an aircraft.

### SUMMARY

A trolley is disclosed herein. In various embodiments, the trolley comprises: a housing defining a cavity; a handle coupled to the housing; a sensor coupled to the handle; a plurality of wheels coupled to the housing; and a braking system configured to lock a wheel in the plurality of wheels in response to a hand being released from the handle based on sensor data from the sensor.

In various embodiments, the sensor is a grip sensor.

In various embodiments, the trolley further comprises a plurality of lights disposed in the cavity, a light in the plurality of lights configured to emit an electromagnetic radiation having an average wavelength between 200 nm and 280 nm.

In various embodiments, the trolley further comprises a unique identifier coupled to the housing, the unique identifier configured to be read by a machine vision device. The trolley can further comprise a position sensor coupled to the housing, the position sensor configured to detect a position of the trolley relative to a reference location.

In various embodiments, the trolley further comprises a controller, the controller configured to: receive sensor data from the sensor; determine based on the sensor data the hand was released from the handle; and actuating an actuator of the braking system to lock the wheel in response to determining the hand was released from the handle.

In various embodiments, the trolley further comprises a passive safety system, the passive safety system configured to actuate an actuator of the braking system in response to the hand being released from the handle.

A trolley system is disclosed herein. In various embodiments, the trolley system comprises: a plurality of lights; a machine vision camera; and a controller in electronic communication with the plurality of lights and the machine vision camera, the controller configured to: receive machine vision data from the machine vision camera, determine a location of a trolley; and command a set of lights in the plurality of lights to illuminate the trolley in response based on the location and the vision data.

In various embodiments, the trolley system further comprises the trolley, the trolley comprising a unique identifier.

In various embodiments, the trolley comprises a plurality of lights disposed in a cavity of a housing of the trolley, each light in the plurality of lights configured to emit an electromagnetic radiation having an average wavelength between 200 nm and 280 nm. In various embodiments, the trolley further comprises a grip sensor coupled to a handle of the trolley. In various embodiments, the trolley system further comprises a braking system in operable communication with a wheel of the trolley, the braking system configured to lock in response to the grip sensor detecting a hand no longer gripping the grip sensor.

In various embodiments, the machine vision camera is configured to read the unique identifier.

In various embodiments, the trolley system further comprises an aircraft, wherein the plurality of lights are disposed in a cabin of the aircraft.

In various embodiments, the machine vision camera is disposed in the cabin of the aircraft.

An aircraft is disclosed herein. In various embodiments, the aircraft comprises: a trolley configured to travel along an aisle of a cabin of the aircraft; a plurality of lights disposed in the cabin; a machine vision camera; and a controller in electronic communication with the machine vision camera and the plurality of lights, the controller configured to emit light via a set of lights in the plurality of lights based on data received from the machine vision camera.

In various embodiments, the aircraft further comprises a unique identifier configured to be disposed on a uniform of a flight attendant, the machine vision camera configured to read the unique identifier.

In various embodiments, the trolley further comprises a position sensor, the controller configured to emit light via the set of lights based at least in part on data from the position sensor.

In various embodiments, the trolley further comprises a sensor and a braking system, the braking system configured to operate in response to the sensor determining a hand has been removed from a handle of the trolley. The sensor can comprise a grip sensor.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIG. 1 illustrates a top view of an aircraft, in accordance with various embodiments.
FIG. 2 illustrates a schematic view of the trolley system of the aircraft, in accordance with various embodiments.
FIG. 3 illustrates a process performed by the trolley system, in accordance with various embodiments.
FIG. 4 illustrates a schematic view of a safety system, in accordance with various embodiments.
FIG. 5 illustrates a schematic view of a safety system, in accordance with various embodiments.
FIG. 6 illustrates a trolley for use in a trolley system, in accordance with various embodiments.
FIG. 7 illustrates a perspective view of a trolley system, in accordance with various embodiments.

### DETAILED DESCRIPTION

The following detailed description of various embodiments herein refers to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the invention as defined by the claims. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

Disclosed herein is trolley system for use on an aircraft. In various embodiments, the trolley system comprises a machine vision camera, a lighting system, and a unique identifier. In various embodiments, the machine vision camera is configured to detect the unique identifier and determine a location of the unique identifier. In response to the machine vision camera detecting and determining the location of the unique identifier, a processor can command the lighting system to illuminate only a local area where the unique identifier is located. In this regard, lighting can be provided only in the local areas where the trolley is during a catering service on an aircraft.

Disclosed herein is a safety system for a trolley for use in an aircraft. In various embodiments, the safety system comprises a sensor (or sensors) configured to detect whether hands are on or off the handles of the trolley. In response to hands being removed from the handle of the trolley, the safety system can activate brakes on the trolley to prevent the trolley from sliding. In various embodiments, the safety system can remove any manual aspect of braking during catering service on an aircraft and also mistake proof the braking function of the trolley, in accordance with various embodiments.

Further disclosed herein is a sanitization system for a trolley. The sanitization system can comprise a light system including a plurality of lights. Each light in the plurality of lights can be configured to emit an ultraviolet light (e.g., having an average wavelength between 200 nm and 280 nm). In this regard, the light system can be configured to sanitize an internal cavity of the trolley during operation, in accordance with various embodiments.

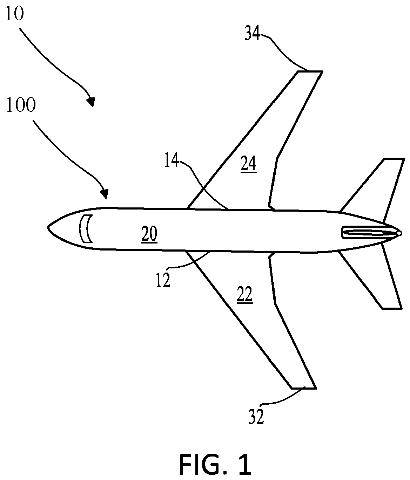

Referring now to FIG. 1, an aircraft 10 having trolley system 100 disposed therein is illustrated in accordance with various embodiments. The aircraft comprises a fuselage 20, wings 22, 24, each wing 22, 24 extending from a root 12, 14 disposed at the fuselage to a tip 32, 34 disposed distal to the fuselage. In various embodiments, the trolley system 100 is disposed within the fuselage 20 (i.e., in a cabin of the fuselage 20). In this regard, the trolley system 100 is configured to be utilized during in-flight catering to provide food and/or beverages to airline passengers.

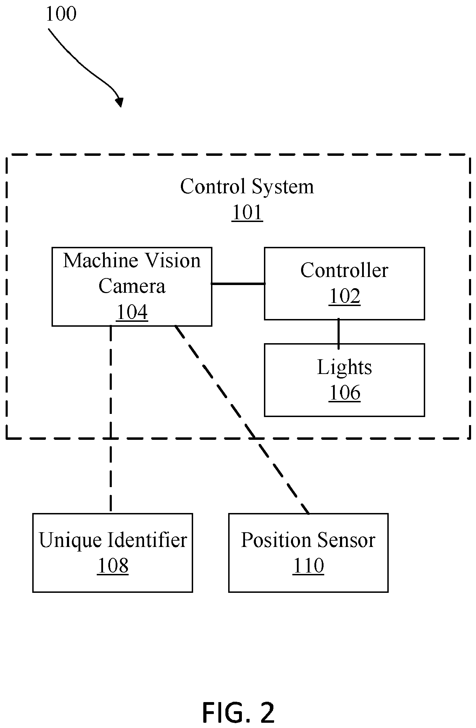

Referring now to FIG. 2, a schematic view of the trolley system 100 is illustrated, in accordance with various embodiments. The trolley system 100 comprises a control system 101, a unique identifier 108, and a position sensor 110. In various embodiments, the unique identifier can be any type of identifier capable of being read by a machine vision camera 104. For example, the unique identifier 108 can comprise a barcode, a radio frequency identification ("RFID") tag, a quick response ("QR") code, a near field communication ("NFC") tag, or the like. The present disclosure is not limited in this regard. In various embodiments, the position sensor 110 can be any position sensor, such as a potentiometric sensor, an LVDT or RVDT sensor, an optical sensor, a magnetic & hall effect sensor, and/or a magneto-strictive sensor. The present disclosure is not limited in this regard.

In various embodiments, as described further herein, the position sensor 110 can be coupled to, or embedded within, a trolley. In this regard, the position sensor 110 can continuously provide position data to the control system 101, in accordance with various embodiments. In various embodiments, the position sensor 110 can be detectable by the machine vision camera 104 of the control system 101 or be configured to transmit position data to the control system 101 via any method known in the art, such as Wi-Fi or the like. In various embodiments, the position sensor 110 is configured to determine a position relative to a reference location. For example, the position sensor 110 can continuously measure a distance from a reference point in the aircraft 10 from FIG. 1 and transmit the position data to the control system 101 to determine which lights in the plurality of lights 106 should be illuminated as described further herein.

In various embodiments, the control system 101 comprises a controller 102, a machine vision camera 104, and lights 106. In various embodiments, the controller is in electrical communication with each light in the plurality of lights 106 on-board the aircraft. In this regard, during operation of the trolley system 100, the controller can determine which lights should be on and where the light should be directed, in accordance with various embodiments.

In various embodiments, sequence controller 102 may be integrated into computer systems of aircraft 10 from FIG. 1. In various embodiments, controller 102 may be configured as a central network element or hub to access various systems and components of control system 101. In various embodiments, controller 102 may comprise a processor. In various embodiments, controller 102 may be implemented in a single processor. In various embodiments, controller 102 may be implemented as and may include one or more processors and/or one or more tangible, non-transitory memories and be capable of implementing logic. Each processor can be a general-purpose processor, a digital signal processor (DSP), an application specific integrated circuit (ASIC), a field programmable gate array (FPGA) or other programmable logic device, discrete gate or transistor logic, discrete hardware components, or any combination thereof. Controller 102 may comprise a processor configured to implement various logical operations in response to execution of instructions, for example, instructions stored on a non-transitory, tangible, computer-readable medium configured to communicate with controller 102.

System program instructions and/or controller instructions may be loaded onto a non-transitory, tangible computer-readable medium having instructions stored thereon that, in response to execution by a controller, cause the controller to perform various operations.

In various embodiments, the control system 101 can comprise a single machine vision camera 104 in a cabin of the aircraft, a plurality of the machine vision camera 104 or the like. In various embodiments, having multiple of the machine vision camera 104 can facilitate an entire cabin of an aircraft being covered by the plurality of the machine vision camera 104. In various embodiments, smaller aircrafts may utilize a single machine vision camera 104.

In various embodiments, the control system 101 is configurable, and adaptable to be retrofitted with newer technologies as they become introduced. In this regard, the control system 101 can replace one component with a newer component and be within the scope of this disclosure.

In various embodiments, the control system 101 is designed so that the position sensor 110 can be calibrated accurately by the ground crew on a regular basis, so that Control system 101 works as expected.

In various embodiments, the machine vision camera 104 is configured to detect the unique identifier 108 and determine a location of the unique identifier relative to the lights 106. In this regard, the controller 102, receives an indication from the machine vision camera 104 that the unique identifier has been detected in a specific location. In response to the controller 102 receiving the indication, the controller 102 commands a set of lights in the lights 106 to illuminate the unique identifier 108. In various embodiments, the unique identifier 108 can be worn on a flight attendant's uniform, on a flight attendant's wrist band, on each trolley, or the like. The present disclosure is not limited in this regard. In various embodiments, the unique identifier 108 can comprise a QR code, a bar code, or other optical indicia. In various embodiments, the unique identifier can also be an RFID tag, a low energy Bluetooth or NFC device, or the like and still be within the scope of this disclosure.

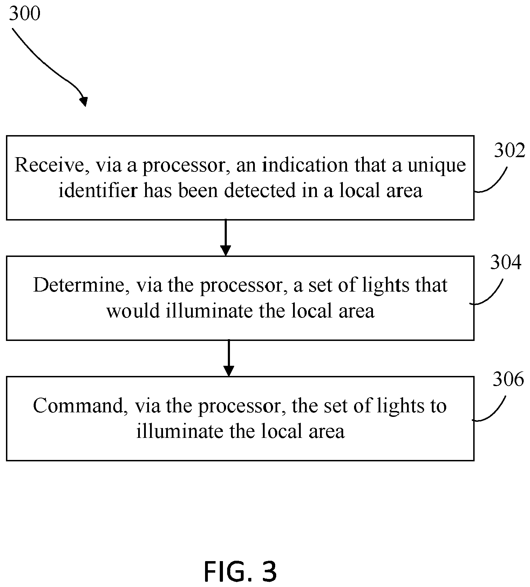

Referring now to FIG. 3, a process 300 of operating the trolley system 100 from FIG. 2 is illustrated, in accordance with various embodiments. With combined reference to FIGs. 2 and 3, the process 300 comprises receiving, via a processor (e.g., within the controller 102), an indication that a unique identifier 108 has been detected in a local area (step 302). In various embodiments, the indication is received from a machine vision camera 104. In this regard the machine vision camera 104 detects the unique identifier and determines the local area and transmits the information to the processor (e.g., the controller 102), in accordance with various embodiments. In various embodiments, the machine vision camera 104 can be a vision camera or NFC or low energy Bluetooth (Bluetooth LE) device, or the like.

In various embodiments, the process 300 further comprises determining, via the processor, a set of lights in a plurality of lights that would illuminate the local area (step 304). In various embodiments, based on the local area identified by the machine vision camera 104 and the controller having locations of each light in the plurality of lights 106 stored in a memory, the processor of the controller 102 can determine the set of lights 106 that would illuminate the local area. In various embodiments, step 304 further comprises receiving position data prior to determining the set of lights that would illuminate the local area. In various embodiments, the position data can be received from a position sensor 110 or from the machine vision camera 104. In this regard, the position sensor 110 can transmit data directly to the controller 102 or the machine vision camera 104 can be used in combination with the position sensor (e.g., by acting as a reference point or the like), in accordance with various embodiments. The present disclosure is not limited in this regard.

In various embodiments, the process 300 further comprises commanding, via the processor, the set of lights to illuminate the local area (step 306). In various embodiments, the process 300 can be repeated over a predetermined period of time. For example, every 2 seconds, the machine vision camera could re-scan for the unique identifier to determine whether additional lights should be illuminated and/or whether lights that are currently illuminated should be shut off. In this regard, the system 100 and the process 300 can facilitate fewer lights being utilized during a catering service, which could benefit passengers that are sleeping during catering service, in accordance with various embodiments. In various embodiments, lesser light also reduces energy consumed and/or fuel burnt. In this regard, a carbon footprint can be reduced, in accordance with various embodiments.

In various embodiments, the processor can also control a light intensity of the lights 106 during the catering service. In this regard, aft and forward of the trolley can be dimmer relative to the trolley, in accordance with various embodiments.

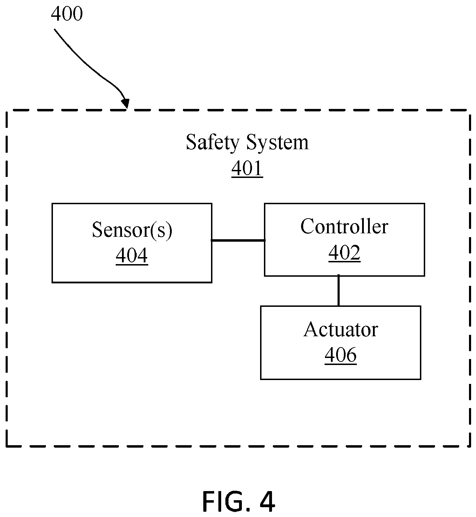

Referring now to FIG. 4, a schematic view of a safety system 401 for a trolley 400 for use in a trolley system 100 from FIG. 1 is illustrated, in accordance with various embodiments. The trolley 400 comprises a safety system 401 configured to control brakes of the trolley 400 as described further herein. In various embodiments, the safety system 401 comprises a controller 402, a sensor 404 (e.g., a grip sensor, a pressure sensor, or the like), and an actuator 406. In various embodiments, the actuator is operably coupled to a brake system of the trolley 400. In this regard, in response to the actuator 406 being activated, the brake system can apply pressure to a wheel of the trolley 400 to prevent movement of the wheel of the trolley 400, in accordance with various embodiments.

In various embodiments, the sensor 404 can be embedded in handles of the trolley 400. In this regard, the sensor 404 can be configured to detect a grip strength, a pressure on the handles or the like. In response to the grip strength or the pressure falling below a pressure threshold, the controller 402 can actuate the actuator 406 to apply a brake force to the wheel of the trolley 400. In this regard, the safety system 401 can be configured to automatically engage brakes of the trolley 400 in response to a flight attendant releasing his or her hands from the handles of the trolley, in accordance with various embodiments.

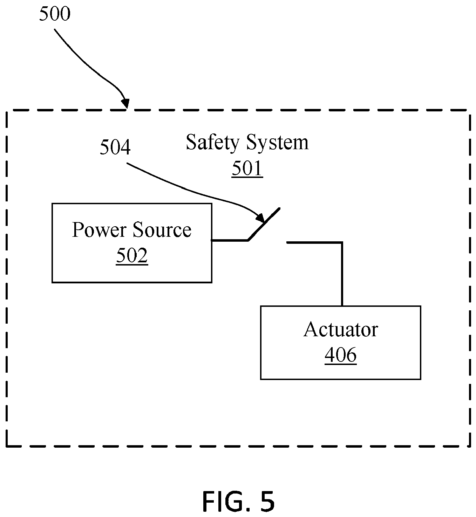

Although illustrated as an active system, safety system 401 is not limited in this regard. For example, with reference now to FIG. 5, a safety system 501 with a sensor 504 that comprises a pressure switch, or the like is illustrated in accordance with various embodiments. In various embodiments, in response to a pressure detected by the sensor 504 falling below a threshold pressure, the sensor 504 can close the pressure switch, causing a power source 502 to be electrically coupled to the actuator 406. In various embodiments, once the pressure exceeds the threshold pressure, the actuator becomes deenergized and the brakes can return to a non-engaged state. Accordingly, a passive safety system 501 is also within the scope of this disclosure.

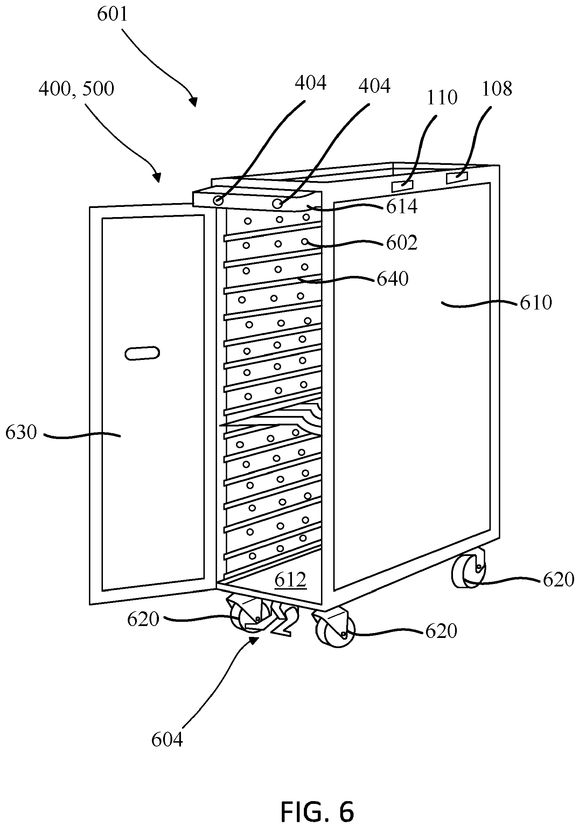

Referring now to FIG. 6, a perspective view of a trolley 400, 500 is illustrated, in accordance with various embodiments. The trolley 400, 500 comprises a housing 610, a plurality of wheels 620 coupled to the housing 610, a door 630 disposed on a side of the housing 610, and guides 640, in accordance with various embodiments. In various embodiments, the guides 640 are configured to receive respective shelves or trays. The present disclosure is not limited in this regard. In various embodiments, guides 640 are spaced apart vertically within a cavity 612 of the housing 610. In various embodiments, guides 640 are disposed on opposite sides of the housing 610. In this regard, a tray or shelf can be slid into the cavity 612 and rest on the guides 640, in accordance with various embodiments.

In various embodiments, the trolley 400, 500 comprises a handle 614 disposed on an aft end of the trolley 400, 500. In various embodiments, the handle 614 comprises the sensor(s) 404 disposed thereon. In this regard, the sensor(s) 404 are configured to detect whether a flight attendant is gripping the handle 614 or not as described previously herein.

In various embodiments, the trolley 400, 500 comprises a sanitization system 601 disposed in the trolley 400, 500. In various embodiments, sanitization system 601 comprises a plurality of lights 602 disposed within the cavity 612 of the housing 610. In various embodiments, each light in the plurality of lights 602 is configured to emit an electromagnetic radiation having an average wavelength between 200 nm and 280 nm (e.g., UV-C light). In this regard, the plurality of lights 602 are configured to sanitize the trolley 400, 500 during operation, in accordance with various embodiments. In various embodiments, the lights 602 can be disposed vertically between guides 640. In this regard, each shelf or tray disposed in the cavity 612 of the housing 610 can be configured to be exposed to the electromagnetic radiation of a respective light in the plurality of lights 602.

In various embodiments, the guides 640 are made of a polymeric material (e.g., a thermoplastic material or the like). Although illustrated as having the lights 602 spaced between the guides 640, the present disclosure is not limited in this regard. For example, in various embodiments, the lights 602 of the sanitization system 601 are embedded within the guides 640. In this regard, a weight of the trolley 400, 500 can be reduced (compared to typical trolleys with metal guides), in accordance with various embodiments.

In various embodiments, in response to the trolley 400, 500 being placed back at a default position after catering to passengers, it can be connected to a charging port (e.g., a USB charging port, an electrical socket, or the like). In this regard, a power source and/or the lights 602 of the trolley 400, 500 can recharge. Thus, the trolley 400, 500 will be fully charged prior to any service being performed.

In various embodiments, the trolley 400, 500 comprises a brake system 604. The brake system 604 can be in operable communication with the actuator 406 from FIGs. 4 or 5. In this regard, in response to the actuator 406 being actuated, the brake system 604 can apply a force to at least one wheel in the plurality of wheels 620. Thus, in response to the actuator 406 being actuated, the brake system 604 prevents the wheels 620 from moving automatically. In various embodiments, a manual system for braking can be used in combination with the automatic braking system disclosed herein. In this regard, in response to the brake system 604 no longer working, the manual braking system can be utilized.

In various embodiments, the trolley 400, 500 comprises a unique identifier 108 and/or a position sensor 110 as described previously herein. In various embodiments, the unique identifier 108 is disposed on a side of the housing 610. However, the present disclosure is not limited in this regard. For example, as stated previously herein, the unique identifier 108 can be disposed on a uniform of a flight attendant or in any other location of the trolley 400, 500 and be within the scope of this disclosure. Similarly, in accordance with various embodiments, the position sensor 110 can be coupled to the trolley 400, 500. In various embodiments, the position sensor 110 can be disposed on a side of the housing 610.

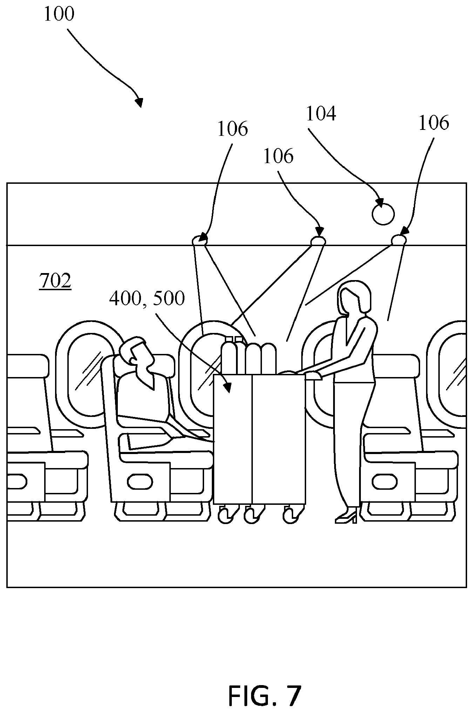

Referring now to FIG. 7, a local area of the trolley system 100 from FIG. 2 is illustrated during operation, in accordance with various embodiments. The trolley system 100 is configured to operate within a cabin 702 of the aircraft 10. In various embodiments, the plurality of lights 106 can be disposed in a ceiling of the cabin 702. In various embodiments, the plurality of lights can be a light in a passenger service unit (PSU) within the aircraft. The present disclosure is not limited in this regard.

In various embodiments, the machine vision camera 104 can be installed in the aircraft interior ceiling or the PSU within the cabin 702. The present disclosure is not limited in this regard. In various embodiments, multiple areas within the cabin 702 can include the machine vision camera 104. In this regard, once a first machine vision camera 104 can no longer read a unique identifier on the trolley, or on the uniform of the flight attendant, a second machine vision camera 104 can be installed, in accordance with various embodiments.

Benefits, other advantages, and solutions to problems have been described herein regarding specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods, and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether explicitly described. After reading the description, it will be apparent to one skilled in the relevant art(s) how to implement the disclosure in alternative embodiments.

Finally, it should be understood that any of the above-described concepts can be used alone or in combination with any or all of the other above-described concepts. Although various embodiments have been disclosed and described, one of ordinary skill in this art would recognize that certain modifications would come within the scope of the claims.

## Claims

1. A trolley, comprising:
a housing (610) defining a cavity (612);
a handle (614) coupled to the housing;
a sensor (404) coupled to the handle;
a plurality of wheels (620) coupled to the housing; and
a brake system (604) configured to lock a wheel in the plurality of wheels in response to a hand being released from the handle based on sensor data from the sensor.

2. The trolley of claim 1, wherein the sensor is a grip sensor.

3. The trolley of claim 1 or 2, further comprising a plurality of lights (602) disposed in the cavity, a light in the plurality of lights configured to emit an electromagnetic radiation having an average wavelength between 200 nm and 280 nm.

4. The trolley of any preceding claim, further comprising a unique identifier (108) coupled to the housing, the unique identifier configured to be read by a machine vision device (104), and optionally further comprising a position sensor (110) coupled to the housing, the position sensor configured to detect a position of the trolley relative to a reference location.

5. The trolley of any preceding claim, further comprising a controller (402), the controller configured to:
receive sensor data from the sensor;
determine based on the sensor data the hand was released from the handle; and
actuating an actuator of the brake system to lock the wheel in response to determining the hand was released from the handle.

6. The trolley of any preceding claim, further comprising a passive safety system, the passive safety system configured to actuate an actuator of the brake system in response to the hand being released from the handle.

7. A trolley system, the trolley system comprising:
a plurality of lights (602);
a machine vision camera (104); and
a controller (402) in electronic communication with the plurality of lights and the machine vision camera, the controller configured to:
receive machine vision data from the machine vision camera,
determine a location of a trolley; and
command a set of lights in the plurality of lights to illuminate the trolley in response based on the location and the vision data.

8. The trolley system of claim 7, further comprising the trolley (400, 500), the trolley comprising a unique identifier (108), and optionally wherein the trolley comprises a second plurality of lights disposed in a cavity of a housing of the trolley, each light in the second plurality of lights configured to emit an electromagnetic radiation having an average wavelength between 200 nm and 280 nm.

9. The trolley system of claim 8, wherein the trolley further comprises a grip sensor (404) coupled to a handle (614) of the trolley, and optionally further comprising a brake system (604) in operable communication with a wheel of the trolley, the brake system configured to lock in response to the grip sensor detecting a hand no longer gripping the grip sensor.

10. The trolley system of claim 8 or 9, wherein the machine vision camera is configured to read the unique identifier.

11. The trolley system of any of claims 7 to 10, further comprising an aircraft (10), wherein the plurality of lights are disposed in a cabin of the aircraft, and optionally wherein the machine vision camera is disposed in the cabin of the aircraft.

12. An aircraft, comprising:
a trolley (400, 500) configured to travel along an aisle of a cabin of the aircraft;
a plurality of lights (602) disposed in the cabin;
a machine vision camera (104); and
a controller (402) in electronic communication with the machine vision camera and the plurality of lights, the controller configured to emit light via a set of lights in the plurality of lights based on data received from the machine vision camera.

13. The aircraft of claim 12, further comprising a unique identifier (108) configured to be disposed on a uniform of a flight attendant, the machine vision camera configured to read the unique identifier.

14. The aircraft of claim 12 or 13, wherein the trolley further comprises a position sensor (110), the controller configured to emit light via the set of lights based at least in part on data from the position sensor.

15. The aircraft of claim 12, 13 or 14, wherein the trolley further comprises a sensor and a brake system (604), the brake system configured to operate in response to the sensor determining a hand has been removed from a handle of the trolley, and optionally wherein the sensor is a grip sensor.
